# EUROPÄISCHE PATENTSCHRIFT

(11) **EP 4 684 520 B1**
(45) Veröffentlichungstag und Bekanntmachung des Hinweises auf die Patenterteilung: **28.10.2026**
(21) Anmeldenummer: 24768911.0
(22) Anmeldetag: 06.09.2024
(51) Int. Cl.: H04L 67/12, H04B 7/185

(54) **VERFAHREN ZUM BETRIEB EINES SATELLITENSCHWARMS UND KOMMUNIKATIONSSYSTEM**
METHOD FOR OPERATING A SATELLITE SWARM, AND COMMUNICATIONS SYSTEM
PROCÉDÉ DE FONCTIONNEMENT D'UN ESSAIM DE SATELLITE, ET SYSTÈME DE COMMUNICATION

(30) Priorität: 18.09.2023 DE 102023003776
(43) Veröffentlichungstag der Anmeldung: 28.01.2026
(73) Patentinhaber: Mercedes-Benz Group AG, 70372 Stuttgart (DE)
(72) Erfinder: CEYLAN, Musa, 71034 Böblingen (DE); AYDIN, Osman, 70771 Leinfelden-Echterdingen (DE)
(74) Vertreter: Novagraaf Group
(86) Internationale Anmeldenummer: PCT/EP2024/074919
(87) Internationale Veröffentlichungsnummer: WO 2025/061483

(56) Entgegenhaltungen:
- US-A1- 2021 364 648
- DAI CUI-QIN ET AL: "QoE-Aware Intelligent Satellite Constellation Design in Satellite Internet of Things", IEEE INTERNET OF THINGS JOURNAL, IEEE, USA, vol. 8, no. 6, 13 October 2020 (2020-10-13), pages 4855 - 4867, XP011842889, DOI: 10.1109/JIOT.2020.3030263
- XING RUOLIN ET AL: "From earth to space: A first deployment of 5G core network on satellite", CHINA COMMUNICATIONS, CHINA INSTITUTE OF COMMUNICATIONS, PISCATAWAY, NJ, USA, vol. 20, no. 4, 1 April 2023 (2023-04-01), pages 315 - 325, XP011939695, ISSN: 1673-5447, [retrieved on 20230228], DOI: 10.23919/JCC.2023.00.001

## Beschreibung

Die Erfindung betrifft ein Verfahren zum Betrieb eines Satellitenschwarms nach der im Oberbegriff von Anspruch 1 näher definierten Art sowie ein Kommunikationssystem nach der im Oberbegriff von Anspruch 7 näher definierten Art.

Mit zunehmender Digitalisierung nimmt auch die Vernetzung von Fahrzeugen zu. Mit Hilfe einer fahrzeugintegrierten Telekommunikationseinheiten lässt sich die Bordelektronik per Mobilfunk mit dem Internet verbinden. Dies ermöglicht das Bereitstellen neuartiger Funktionen im Fahrzeug, von denen sowohl die jeweiligen Fahrzeugnutzer, als auch der Fahrzeughersteller profitiert. So können im Betrieb des Fahrzeugs anfallende Daten, wie beispielsweise Sensordaten, aggregiert und zur Auswertung an den Fahrzeughersteller übertragen werden. Daraus abgeleitete Informationen können zur Weiterentwicklung der Fahrzeuge genutzt werden. Auch können Softwareupdates drahtlos in die jeweiligen Steuergeräte des Fahrzeugs eingebracht werden. Unter Nutzung einer entsprechenden Mobilfunkanbindung können Fahrzeuginsassen zudem Medien wie Filme oder Musik streamen, an einer Videokonferenz teilnehmen, im Internet surfen und dergleichen.

Das entsprechende Mobilfunksignal wird typischerweise über die Basisstationen eines Mobilfunknetzwerkbetreibers bereitgestellt. Es handelt sich somit um ein sogenanntes terrestrisches Kommunikationsnetzwerk. Nachteilig ist dabei, dass eine entsprechende Infrastruktur vorhanden sein muss, um eine ausreichende Netzabdeckung anbieten zu können. In schlecht ausgebauten Regionen kann nur ein schwaches Mobilfunksignal bereitgestellt werden oder es liegen sogar Funklöcher vor.

Um dieses Problem zu lösen, ist das Bereitstellen von Kommunikationsnetzwerken per Satellit bekannt. Somit ist auch eine Kommunikation in entlegenen Regionen der Erde möglich. Hierzu können Kommunikationssatelliten verwendet werden, die sich auf verschiedenen Orbitalbahnen bewegen. Diese Orbitalbahnen können eine unterschiedliche Entfernung zur Erdoberfläche aufweisen, zudem kann es sich um geostationäre Satelliten handeln. Aktuell treten vermehrt Unternehmen in Wettbewerb, die Satellitenschwärme aus einer Vielzahl an Kleinstsatelliten ins All bringen und betreiben, um kostengünstig eine Internetanbindung bereitzustellen. Somit kann auch eine satellitenbasierte Kommunikation, auch als nicht-terrestrisches Kommunikationsnetzwerk bezeichnet, genutzt werden, um eine Anbindung von Fahrzeugen an das Internet zu ermöglichen.

Die für einen einzelnen Nutzer verfügbare Bandbreite ist typischerweise bei einer satelittengestützten Kommunikation jedoch geringer als unter Verwendung eines terrestrischen Kommunikationsnetzwerks. Es ist daher wünschenswert Verfahren und Mittel bereitzustellen, mit deren Hilfe situationsabhängig eine ausreichende Kommunikationsbandbreite zur Verfügung gestellt werden kann.

Aus der EP 0 880 240 A2 ist ein Satellit, ein Satellitkommunikationssystem sowie ein Verfahren zum Steuern der Satelliten bekannt. Die durch die Druckschrift offenbarte Erfindung bezieht sich auf das Problem, dass mittels geostationärer Satelliten oftmals nur eine eingeschränkte Kommunikationsverbindung aufbaubar ist. Je nach Aufenthaltsort auf der Erde kann der in Bezug auf die Erdoberfläche gemessene Sichtwinkel zum geostationären Satelliten klein sein. Die direkte Sichtlinie zum Satelliten kann dann leicht durch große Objekte wie Bäume, Berge oder Hochhäuser verdeckt sein, sodass zwischen dem Satelliten und einem entsprechenden Satellitenempfänger auszutauschende Kommunikationssignale nur eingeschränkt oder gar nicht ausgetauscht werden können. Die Druckschrift beschreibt als Lösung das Ermitteln eines elliptischen Orbits für die Kommunikationssatelliten unter Berücksichtigung von sechs Orbit bezogenen Parametern. Ziel ist es dabei zu erreichen, dass ein zur Kommunikation verwendeter Kommunikationssatellit für einen entsprechenden Satellitenempfänger für einen möglichst großen Zeitraum im Zenit des Himmels zu sehen ist, was die Kommunikationsanbindung verbessert. Dies wird durch das Ermitteln der jeweiligen elliptischen Orbits ermöglicht. Für jeden Kommunikationssatellit wird der jeweilige Orbit vor dem Start festgelegt und der Kommunikationssatellit dann ins All geschossen. Während des Betriebs des Kommunikationssatelliten wird das Einhalten des Orbits kontrolliert und gegebenenfalls Bahnkorrekturen durchgeführt. Das Ermitteln des Orbits unter Berücksichtigung der jeweiligen Orbit bezogenen Parameter ist jedoch aufwändig. Der Orbit wird für jeden Kommunikationssatellit initial festgelegt, sodass, wenn sich der jeweilige Kommunikationssatellit in seinem Orbit befindet, keine größeren Änderungen an der jeweiligen Umlaufbahn möglich sind.

Ferner offenbart die DE 10 2022 125 180 A1 ein System und Verfahren für den Zugriff auf Rechenressourcen verteilt auf eine Gruppe von Satelliten. Dabei empfängt ein Satellit eine Anfrage von einem Benutzerterminal für Rechenressourcen. Der Satellit übermittelt Daten, die mit der Bereitstellung der Rechenressourcen zusammenhängen an das Benutzerterminal. Bei den Rechenressourcen kann es sich um eine nutzbare Bandbreite eines Datenstroms handeln.

Ferner offenbart die DE 10 2016 226 050 A1 ein Verfahren zur vorausschauenden Buchung vom Netzwerkressourcen in einem Mobilfunknetz. Dabei übermitteln Fahrzeuge eine geplante Navigationsroute an den Betreiber eines terrestrischen Mobilfunknetzes. Der Betreiber ermittelt in Abhängigkeit der empfangenen Navigationsrouten einen Kommunikationsbedarf für die jeweiligen zur Netzabdeckung verwendeten Mobilfunkzellen. Netzwerkressourcen für Mobilfunkzellen können somit Bedarfsgerecht genutzt werden.

Ferner offenbart die CN 115119314 A ein Verfahren zur dynamischen Zuweisung von Strahlressourcen eines Satellitenkommunikationssystems. Dabei kann eine Strahlaufteilung eines Kommunikationsstrahls eines Satelliten erfolgen, sodass Kommunikationsressourcen zielgerichtet zwischen mehreren Kommunikationsteilnehmern aufgeteilt werden.

Zudem offenbart die DE 10 2021 003 076 A1 ein Verfahren zur Kommunikation wenigstens eines Mobilfunkgeräts mit einer Mobilfunknetzwerkbasisstation. Dabei wird in Abhängigkeit eines Bedarfs die Kommunikation zwischen dem Mobilfunkgerät und der Mobilfunknetzwerkbasisstation unter Nutzung von Coverage-Enhancement abgewickelt. Ein den Bedarf anzeigender Bedarfsindikator kann dabei über satellitengestützte Telekommunikation übertragen werden. Als Kommunikationsstandard kann 2G bis 5G verwendet werden.

Ferner offenbart die US 2021/0364648 A1 ein Verfahren für ein koordiniertes Satellitenmanagement und Betrieb basierend auf Smart-Contracts. Dabei werden die Satelliten einer LEO-Satellitenkonstellation umpositioniert, um eine verbesserte Netzabdeckung eines durch die Satelliten bereitgestellten Kommunikationsnetzwerks auf der Erde in einem Zielbereich in einem Zielzeitfenster zu ermöglichen.

Ferner offenbart: DAI CUI-QIN ET AL: "QoE-Aware Intelligent Satellite Constellation Design in Satellite Internet of Things"; IEEE INTERNET OF THINGS JOUNRAL, IEEE, USA, Bd. 8, Nr. 6, 13. Oktober 2020 (2020-10-13), Seiten 4855-4867, XP011842889, DOI: 10.1109/JIOT.2020.3030263 ein Verfahren zum Ermitteln von optimierten Bahnparametern für die Satelliten einer LEO-Satellitenkonstellation zur Verbesserung der Netzabdeckung basierend auf einer Verbesserung von Nutzerzufriedenheitsparametern.

Zudem offenbart: XING RUOLIN ET AL: "From earth to space: A first deployment of 5G core network on satellite", CHINA COMMUNICATIONS, CHINA INSTITUTE OF COMMUNICATIONS, PISCATAWAY, NJ, USA, Bd. 20, Nr. 4, 1. April 2023 (2023-04-01), Seiten 315-325, XP011939695, ISSN: 1673-5447, DOI: 10.23919/JCC.2023.00.001 das Bereitstellen eines nicht-terrestrischen Kommunikationsnetzes mittels einer LEO-Satellitenkonstellation unter Verwendung von 5G Mobilfunk.

Der vorliegenden Erfindung liegt die Aufgabe zugrunde ein verbessertes Verfahren zum Betrieb eines Satellitenschwarms anzugeben, mit dessen Hilfe es ermöglicht wird, eine zuverlässigere Kommunikationsverbindung aufzubauen.

Erfindungsgemäß wird diese Aufgabe durch ein Verfahren zum Betrieb eines Satellitenschwarms mit den Merkmalen des Anspruchs 1 gelöst. Vorteilhafte Ausgestaltungen und Weiterbildungen sowie ein Kommunikationssystem zur Ausführung des Verfahrens ergeben sich aus den hiervon abhängigen Ansprüchen.

Ein gattungsgemäßes Verfahren zum Betrieb eines Satellitenschwarms zur Bereitstellung eines nicht-terrestrischen Kommunikationsnetzwerks, wobei der Satellitenschwarm eine Vielzahl Kommunikationssatelliten umfasst, welche individuell durch eine bodengebundene Steuerungszentrale steuerbar sind, sieht vor, dass die Steuerungszentrale einen Kommunikationsbedarf für das Kommunikationsnetzwerk überwacht und nach Detektieren eines Anstiegs des Kommunikationsbedarfs gegenüber einem Standardniveau, wenigstens einen Kommunikationssatelliten zur Erhöhung der durch wenigstens den jeweiligen Kommunikationssatelliten bereitstellbaren Kommunikationskapazität in einer Zielregion auf der Erde für ein Zielzeitfenster ansteuert. Erfindungsgemäß wird zumindest eine der folgenden Aktionen durchgeführt, um die Kommunikationskapazität zu erhöhen: Reduzieren der Orbitalgeschwindigkeit des Kommunikationssatelliten für den Zeitraum, zu dem ein Kommunikationsstrahl des Kommunikationssatelliten auf die Zielregion richtbar ist; und/oder
Bestimmen eines zweiten Kommunikationssatelliten durch die Steuerungszentrale dessen Orbitalbahn ein Richten seines Kommunikationsstrahls auf die Zielregion zum Zielzeitfenster erlaubt, und Erhöhen der Orbitalgeschwindigkeit des zweiten Kommunikationssatelliten derart, dass der Kommunikationsstrahl des zweiten Kommunikationssatelliten spätestens dann auf die Zielregion richtbar ist, wenn der Kommunikationsstrahl des vorausgehenden Kommunikationssatelliten die Zielregion verlässt, wobei
ein Agent ein Kommunikationsbedarfssignal an die Steuerungszentrale übermittelt, wobei das Kommunikationsbedarfssignal zumindest die Zielregion und das Zielzeitfenster beschreibt; wobei
der Agent durch ein Fahrzeug ausgebildet wird; und wobei
das Fahrzeug die Zielregion und das Zielzeitfenster durch Analyse einer in eine Navigationseinheit des Fahrzeugs einprogrammierte Navigationsroute ermittelt.

Mit Hilfe des erfindungsgemäßen Verfahrens ist es somit möglich bedarfsorientiert die mittels des Satellitenschwarms bereitstellbare Kommunikationskapazität des nicht-terrestrischen Kommunikationsnetzwerks zielgerichtet zu erhöhen. Liegt also ein hoher Kommunikationsbedarf vor, so wird die Kommunikationskapazität entsprechend erhöht. Somit steigt die Zuverlässigkeit der Kommunikationsanbindung eines jeweiligen über das nicht-terrestrische Kommunikationsnetzwerk kommunizierenden Geräts.

Die Steuerungszentrale wählt dabei denjenigen Kommunikationssatelliten zur Erhöhung der Kommunikationskapazität aus, dessen Bahn so verläuft, dass der von dem jeweiligen Kommunikationssatelliten auf die Erde gerichtete Kommunikationsstrahl zum Zielzeitfenster in die Zielregion richtbar ist. Hierzu kann der Satellitenschwarm generell eine unterschiedliche Anzahl an Kommunikationssatelliten aufweisen. Umfasst der Satellitenschwarm lediglich eine vergleichsweise geringe Anzahl an Kommunikationssatelliten, so können beispielsweise nur einige Regionen der Erde, wie beispielsweise ein bestimmtes Land, zuverlässig abgedeckt werden. Der Satellitenschwarm kann jedoch auch so viele Kommunikationssatelliten umfassen, dass sehr viele oder sogar alle Länder dieser Erde oder sogar auch unbewohnte Regionen, wie das Meer, abdeckbar sind. Besonders bevorzugt umfasst der Satellitenschwarm so viele Kommunikationssatelliten, dass zu jeder Zeit jeder Punkt der Erde durch das nicht-terrestrische Kommunikationsnetzwerk abdeckbar ist.

Gemäß des Standes der Technik werden die jeweiligen Orbitalbahnen der Kommunikationssatelliten festgelegt und die Kommunikationssatelliten ins All geschossen. Die Orbitalbahnen werden so bestimmt, dass die generelle Netzabdeckung gewährleistet wird. Es können nun jedoch Fälle auftreten, in den in bestimmten Zielregionen zu bestimmten Zielzeitfenstern die durch einen standardmäßig betriebenen Kommunikationssatelliten bereitgestellte Kommunikationskapazität nicht ausreicht, um sämtliche Nutzer innerhalb der Zielregion zum Zielzeitfenster mit ausreichender Kommunikationsbandbreite zu versorgen.

So könnten die Orbitalbahnen der Kommunikationssatelliten so verlaufen, dass jeder Punkt eines bestimmten Landes zu jeder Zeit mit einer Netzabdeckung versorgt werden kann. Bewegt sich dann ein bestimmter Kommunikationssatellit seiner Orbitalbahn folgend weiter, so folgt ihm ein weiter Kommunikationssatellit, um die Netzabdeckung aufrecht zu erhalten. Diese Kommunikationssatelliten können über eine bestimmte maximale Kommunikationsbandbreite verfügen. Bei einem Ereignis wie einem Festival können sich jedoch auf einem Fleck der Erde so viele Nutzer aufhalten, dass die Kommunikationsbandbreite eines einzelnen Satelliten nicht mehr zu Versorgung aller Nutzer ausreicht. Dieser Fall wird durch die Steuerungszentrale festgestellt und die Kommunikationskapazitäten entsprechend erhöht, sodass eine ausreichende Kommunikationsbandbreite für wenigstens einen Nutzer, der sich zum Zielzeitfenster in der Zielregion aufhält, ermöglicht wird. Beispielsweise kann die Orbitalgeschwindigkeit des folgenden Kommunikationssatelliten erhöht werden, damit beide Kommunikationssatelliten gleichzeitig die jeweilige Region mit einer Netzabdeckung versorgen können. Während des Überflugs der Zielregion könnte dann zusätzlich die Orbitalgeschwindigkeit abgesenkt werden, um die Zielregion länger versorgen zu können. Das Reduzieren der Orbitalgeschwindigkeit hilft es zudem die Netzabdeckung in der Zielregion länger aufrecht zu erhalten, sollte der nächste folgende Kommunikationssatellit nicht rechtzeitig in der Zielregion eintreffen können.

Ein jeweiliger Kommunikationssatellit kann einen gemäß einer festen und nicht änderbaren Ausrichtung auf die Erdoberfläche gerichteten Kommunikationsstrahl aufweisen. Folgt der Kommunikationssatellit seiner Orbitalbahn, so wird entsprechend der Kommunikationsstrahl die Zielregion für eine bestimmte Zeitdauer überstreichen. Indem die Orbitalgeschwindigkeit des Kommunikationssatelliten zu diesem Zeitfenster reduziert wird, kann entsprechend erreicht werden, dass der Kommunikationsstrahl des Kommunikationssatelliten während dem Folgen seiner Orbitalbahn für einen längeren Zeitraum in die Zielregion gerichtet wird. Sobald der Kommunikationsstrahl die Zielregion verlässt, wird dann entsprechend die Orbitalgeschwindigkeit des Kommunikationssatelliten wieder erhöht.

Eine Reduktion der Orbitalgeschwindigkeit des Kommunikationssatelliten ginge generell mit einem Absinken des Kommunikationssatelliten in Richtung der Erdoberfläche einher. Dem kann dadurch entgegengewirkt werden, dass über entsprechende Schubdüsen Gegenschub ausgeübt wird, sodass der jeweilige Kommunikationssatellit seine Höhe hält. Auch wäre es denkbar nach dem Verlassen des Kommunikationsstrahls der Zielregion die Orbitalgeschwindigkeit des Kommunikationssatelliten gegenüber dem Standardniveau zu erhöhen, sodass der Kommunikationssatellit wieder auf seine ursprüngliche Höhe ansteigt. Nach Erreichen der ursprünglichen Höhe kann dann wieder die standardmäßig gewählte Orbitalgeschwindigkeit eingestellt werden.

Bevorzugt wird der vom Kommunikationssatellit auf die Erde gerichtete Kommunikationsstrahl gezielt gegenüber der Zielregion ausgerichtet. Dies ermöglicht es den Kommunikationsstrahl bereits beim Annähern an die Zielregion auf diese auszurichten und beim Entfernen von der Zielregion diesen länger in die Zielregion zu werfen. Besonders bevorzugt wird das Ausrichten des Kommunikationsstrahls und das Reduzieren der Orbitalgeschwindigkeit beim Überfliegen der Zielregion kombiniert. Dies ermöglicht es eine Abdeckung des nicht-terrestrischen Kommunikationsnetzwerks in der Zielregion durch den Kommunikationsstelliten für einen besonders langen Zeitraum aufrecht zu erhalten.

In Abhängigkeit der vom Satellitenschwarm umfassten Anzahl an Kommunikationssatelliten kann gegebenenfalls die Gefahr bestehen, dass zur ausreichenden Bereitstellung der angeforderten Kommunikationskapazität zu wenige Kommunikationssatelliten in Reichweite der Zielregion sind. Entsprechend kann die Orbitalgeschwindigkeit wenigstens eines zweiten Kommunikationssatelliten erhöht werden, um einen solchen Kommunikationssatelliten bereitzustellen bzw. einen solchen Kommunikationssatelliten zu ersetzen, dessen Kommunikationsstrahl die Zielregion verlässt. Dadurch kann die insgesamt in die Zielregion werfbare Kommunikationsbandbreite aufrechterhalten oder sogar erst zeitnahe bereitgestellt werden. Dies kann im weitesten Sinne auch als Erhöhen der Kommunikationskapazität verstanden werden, da ansonsten durch das Entfernen des jeweiligen Kommunikationssatelliten von der Zielregion die Kommunikationsbandbreite in der Zielregion einbrechen würde. Gegenüber dieser reduzierten Kommunikationsbandbreite ist dann durch das zeitige Bereitstellen des zweiten Kommunikationssatelliten die Kommunikationskapazität erhöht.

Wie im Vorigen beschrieben, übermittelt ein Agent ein Kommunikationsbedarfssignal an die Steuerungszentrale, wobei das Kommunikationsbedarfssignal zumindest die Zielregion und das Zielzeitfenster beschreibt. Der Agent kann beispielsweise über das Internet an die Steuerungszentrale angeschlossen sein und entsprechende Kommunikationsbedarfsignale über eine entsprechende API versenden. Mittels des Kommunikationsbedarfssignals lässt sich der Steuerungszentrale mitteilen, wann und wo eine erhöhte Kommunikationskapazität für das nicht-terrestrische Kommunikationsnetzwerk angefordert wird. Dies ermöglicht es den Agenten flexibel und nach Bedarf mit dem Satellitenschwarm zu interagieren. Neben der Zielregion und dem Zielzeitfenster können weitere Informationen im Kommunikationsbedarfssignal enthalten sein, wie beispielsweise eine gewünschte Kommunikationsbandbreite und/oder eine gewünschte minimale Datenmenge, beispielsweise 10 GByte an mobilen Daten.

Mit Hilfe dieser Zusatzinformationen kann der Agent sicherstellen, dass die angeforderte Kommunikationsbandbreite zur Bereitstellung der gewünschten Datenanbindung, beispielsweise zum Streamen eines Films, ausreicht bzw. eine herunterzuladende Datei in einer bestimmten Größe auch ausreichend schnell aus dem Internet heruntergeladen werden kann.

Bei dem Agenten handelt es sich im weitesten Sinne um einen Nutzer. Der jeweilige Nutzer verwendet zur Interaktion mit dem Satellitenschwarm ein Gerät.

Wie im Vorigen beschrieben, ist ein jeweiliger Agent durch ein Fahrzeug ausgebildet. Entsprechend umfasst das Fahrzeug Mittel, die zur Interaktion mit dem Satellitenschwarm fähig sind, wie eine speziell hierzu eingerichtete Recheneinheit, einen entsprechende Satellitenempfänger und dergleichen. Dies ermöglicht es einem Fahrzeuginsassen bequem aus dem Fahrzeug heraus entsprechend gesteigerte Kommunikationskapazitäten des nicht-terrestrischen Kommunikationsnetzwerks zu buchen. Dabei kann der Nutzer gemäß einer nicht unter den Schutzumfang fallenden Ausführungsform des Verfahrens manuell festlegen für welche Zielregion und zu welchem Zielzeitfenster der erhöhte Kommunikationsbedarf angefordert wird. Hierzu können beispielsweise entsprechende Bedieneingaben über eine beliebige Mensch-Maschine-Schnittstelle des Fahrzeugs getätigt werden. Beispielsweise kann hierzu eine berührempfindliche Anzeigevorrichtung oder ein Sprachbefehl genutzt werden. Weiß beispielsweise die fahrzeugführende Person, dass sie in einem bestimmten Zeitfenster eine zuverlässige Anbindung an das Internet benötigt, und weiß die fahrzeugführende Person ebenfalls, dass sie sich zu diesem Zeitpunkt bzw. Zeitfenster in einem Funkloch eines terrestrischen Kommunikationsnetzwerks aufhalten wird, so kann sie die entsprechend gesteigerten Kommunikationskapazitäten des nicht-terrestrischen Kommunikationsnetzwerks nutzen.

Diese Vorgänge laufen jedoch erfindungsgemäß automatisiert ab.

So ermittelt erfindungsgemäß dabei das Fahrzeug die Zielregion und das Zielzeitfenster durch Analyse einer in eine Navigationseinheit des Fahrzeugs einprogrammierte Navigationsroute. Dies erhöht zum einen den Komfort für die fahrzeugführende Person, da die fahrzeugführende Person dann die entsprechende Zielregion und das Zielzeitfenster nicht mehr manuell ermitteln muss. Zudem wird hierdurch die Zuverlässigkeit erhöht, dass auch tatsächlich eine erhöhte Kommunikationskapazität für das Fahrzeug während der Reise entlang der Navigationsroute vorliegt. Insbesondere ist das adaptive Anpassen von Zielregion und Zielzeitfenster möglich. So kann beispielsweise die aktuelle Verkehrslage nachverfolgt werden, was es ermöglicht, Staus sowie Umleitungen zu berücksichtigen. Entsprechend verschiebt sich die Zielregion bzw. das Zielzeitfenster. Das Fahrzeug ist dann dazu in der Lage, die Zielregion und das Zielzeitfenster während der Fahrt mit dem Fahrzeug adaptiv anzupassen. Dies stellt das Bereitstellen einer ausreichenden Kommunikationsanbindung des Fahrzeugs zu jeglichen Zeitpunkten während der Nutzung sicher.

Der Bedarf nach einer stabilen und zuverlässigen Kommunikationsanbindung kann dabei beispielsweise durch Analyse eines digitalen Kalenders des Nutzers festgestellt werden. Beispielsweise ist zu einem bestimmten Zeitfenster eine Webkonferenz während einer geplanten Fahrt im Kalender eingetragen. Die Recheneinheit des Fahrzeugs könnte dann die Navigationsroute zum Zielort mit in einer digitalen Straßenkarte eingetragenen Funklöchern eines terrestrischen Kommunikationsnetzwerks abgleichen. Führt die Fahrt während der Webkonferenz durch so ein Funkloch, kann ein jeweiliger Bedarf zur Nutzung des nicht-terrestrischen Kommunikationsnetzwerks mit erhöhter Kommunikationskapazität ermittelt werden.

Eine vorteilhafte Weiterbildung des erfindungsgemäßen Verfahrens sieht dabei vor, dass die Steuerungszentrale den wenigstens einen Kommunikationssatelliten zur Reduktion der Kommunikationskapazität ansteuert, wenn der Kommunikationsbedarf auf das Standardniveau zurückgegangen ist. Fällt der Kommunikationsbedarf auf das Standardniveau ab, so ist es auch nicht erforderlich, eine erhöhte Kommunikationskapazität bereitzustellen. Entsprechend kann die Kommunikationskapazität des wenigstens einen Kommunikationssatelliten wieder reduziert werden, was einen effizienten Betrieb bzw. eine effiziente Nutzung der entsprechenden Kommunikationsressourcen erlaubt. Zudem ermöglicht dies eine besonders zuverlässige Bereitstellung erhöhter Kommunikationskapazitäten in Abhängigkeit der Kommunikationsbedarfe. Steigt der Kommunikationsbedarf in einigen Regionen der Erde zu bestimmten Zeitfernstern und sinkt in anderen ab, so können die jeweiligen Kommunikationssatelliten zielgerichtet eingesetzt werden, um jeweils erhöhte oder verminderte Kommunikationskapazitäten bereitzustellen.

Eine nicht unter den Schutzumfang fallende Ausgestaltung des Verfahrens sieht vor, dass der Agent durch eine Station ausgebildet wird, wobei die Station eine solche Region als Zielregion und ein solches Zeitfenster als Zielzeitfenster ermittelt, in der zum Zielzeitfenster ein Ereignis stattfindet. Bei dem Ereignis kann es sich beispielsweise um eine Katastrophe, wie eine Umweltkatastrophe handeln. Beispielsweise kann es sich dabei um einen Tsunami, einen Waldbrand, ein Erdbeben, einen Hurrikan, einen Tornado oder dergleichen handeln. In Katastrophengebieten fällt oftmals aufgrund der Zerstörung von Infrastruktur ein terrestrisches Kommunikationsnetzwerk aus, sodass hier das erfindungsgemäße Verfahren besonders zur Geltung kommen kann. So erfordern die Einsatzkräfte vor Ort eine entsprechende Kommunikationsanbindung, um Informationen austauschen zu können. Bei dem Ereignis könnte es sich auch um einen Stau handeln. So kann die Kommunikationsanbindung der sich im Stau befindlichen Fahrzeuge verbessert werden. Bei dem Ereignis könnte es sich auch um eine Massenveranstaltung wie ein Festival handeln. Dies ermöglicht eine zuverlässige Anbindung der mobilen Endgeräte der Festivalbesucher an das Internet. Generell kann es sich bei dem Ereignis um jegliches Ereignis handeln, was zu einer erhöhten Ansammlung von Nutzern in einer bestimmten geografischen Region führt.

Bei der Station kann es sich um eine Behörde handeln, die beispielsweise entsprechende Katastrophen oder auch den Verkehr überwacht. Auch kann es sich um einen Veranstalter des Festivals handeln. Generell könnte es sich auch um einen Besucher des Festivals handeln. Die Station, bzw. der Agent, nutzt entsprechende technische Mittel zur Interaktion mit dem Satellitenschwarm, wie beispielsweise einen Desktopcomputer zur Übertragung entsprechender Kommunikationsbedarfssignale. Dies erlaubt es beispielsweise nicht nur den Festivalbetreiber eine erhöhte Kommunikationskapazität für das Festival zu buchen, sondern auch den jeweiligen Festivalbesuchern. Hierzu könnte ein Festivalbesucher auch sein mobiles Endgerät, beispielsweise ein Smartphone, nutzen.

Entsprechend einer weiteren vorteilhaften Ausgestaltung des erfindungsgemäßen Verfahrens, wird zumindest eine der folgenden Aktionen durchgeführt, um die Kommunikationskapazität weiter zu erhöhen:
- Erhöhen der Kommunikationsbandbreite eines von dem Kommunikationssatelliten auf die Erde gerichteten Kommunikationsstrahls;
- Bereitstellen wenigstens eines weiteren durch den Kommunikationssatelliten auf die Erde gerichteten Kommunikationsstrahls;
- Ausrichten des von dem Kommunikationssatellit auf die Erde gerichteten Kommunikationsstrahls auf die Zielregion; und/oder
- Aufteilen der Kommunikationsbandbreite des Kommunikationsstrahls des Kommunikationssatelliten in eine Anzahl an Bandbreitenstücken und Zuordnen eines Bandbreitenstücks wenigstens einem bestimmten Nutzer.

Somit stehen die vielfältigsten individuell oder auch in Kombination durchführbaren Maßnahmen zum Erhöhen der Kommunikationskapazität zur Verfügung. Die Erhöhung der Kommunikationskapazität kann somit darin gesehen werden die innerhalb des Zielzeitfensters in der Zielregion bereitstellbare Kommunikationsbandbreite gegenüber dem "Standardbetrieb", also dem Betrieb des Satellitenschwarms ohne gesonderte Ansteuerungsmaßnahmen in Abhängigkeit des Kommunikationsbedarfs, zu steigern. Dies lässt sich dadurch erreichen, dass die Zeit zu der ein einzelner Kommunikationssatellit die Zielregion mit Netzabdeckung versorgen kann erhöht wird und/oder dadurch, dass die über einen oder mehrere Kommunikationsstrahlen bereitstellbare Kommunikationsbandbreite generell erhöht wird.

Ein jeweiliger Kommunikationssatellit ist dazu in der Lage eine Netzabdeckung auf der Erdoberfläche durch das Richten des entsprechenden Kommunikationsstrahls auf den jeweiligen Teil der Erde zu ermöglichen. Der Kommunikationsstrahl verfügt dabei über eine bestimmte Kommunikationsbandbreite, beispielsweise in Form von GBit/s oder auch abweichenden Größenordnungen. Je mehr Nutzer sich im durch den Kommunikationssatelliten abgedeckten Areal aufhalten, desto weniger Kommunikationsbandbreite kann den individuellen Nutzern zur Verfügung gestellt werden. Im Standardbetrieb kann der Kommunikationssatellit eine erste Kommunikationsbandbreite nutzen. Wird dann eine erhöhte Kommunikationskapazität angefordert, so kann der Kommunikationssatellit die Kommunikationsbandbreite erhöhen.

Der Kommunikationssatellit kann generell auch Mittel zur Bereitstellung eines weiteren Kommunikationsstrahls aufweisen. Durch Hinzuschalten beispielsweise eines gleichwertigen zweiten Kommunikationsstrahls kann dann die Kommunikationsbandbreite verdoppelt werden. Der jeweilige Kommunikationssatellit fungiert dabei wie ein Kommunikationsrelais zwischen einer entsprechenden bodengebundenen Kommunikationsstation, beispielsweise der Steuerungszentrale, und den Endgeräten der Nutzer. Entsprechend wird auch die Anbindung des jeweiligen Kommunikationssatelliten an die bodengebundene Kommunikationsstation angepasst, um der erhöhten Datenübertragungsrate gerecht zu werden. Beispielsweise kann die Kommunikationsbandbreite des zur Kommunikation mit der Kommunikationsstation verwendeten Kommunikationsstrahls erhöht werden oder auch hierzu ein zweiter Kommunikationsstahl hinzugeschaltet werden.

Generell wäre es auch denkbar, dass ein jeweiliger Kommunikationssatellit mittelbar über wenigstens einen weiteren Kommunikationssatelliten an entsprechende bodengebundene Kommunikationsstationen angebunden ist. Somit kann eine Verkettung mehrerer Kommunikationssatelliten in einer entsprechenden Kommunikationsleitung aufgebaut werden. Dabei kann ein Teil des Datenstroms auch auf verschiedene Kommunikationssatelliten verteilt werden. Beispielsweise kann die erste Hälfte der zur Kommunikationsstation zu übermittelnden Daten über einen dritten Kommunikationssatelliten und die zweite Hälfte über einen vierten Kommunikationssatelliten zur Kommunikationsstation weitergeleitet werden.

Die mittels eines Kommunikationssatelliten bereitstellbare Kommunikationsbandbreite kann auch in einzelne Bandbreitenstücke aufgeteilt werden. Diese Bandbreitenstücke können unterschiedlich groß sein. Lässt sich beispielsweise eine Kommunikationsbandbreite von 10 GBit/s bereitstellen, so können drei Bandbreitenstücke zu je 2 GBit/s und vier Bandbreitenstücke zu je 1 GBit/s bereitgestellt werden. Diese Bandbreitenstücke werden dann den jeweiligen Nutzern zugeordnet. Somit lassen sich unterschiedliche Kommunikationsbandbreiten von jeweiligen Nutzern verwenden. Es wird dabei sichergestellt, dass der jeweilige Nutzer für den jeweiligen Zeitraum die ihm jeweils zugeteilte Kommunikationsbandbreite nutzen kann.

Halten sich in der Zielregion, insbesondere beim Stattfinden eines Ereignisses, besonders viele Nutzer auf, so können einige besonders relevante Nutzer, wie beispielsweise Einsatzkräfte oder VIPs, die eine entsprechende Datenvolumenoption gebucht haben, ihr jeweiliges zugeordnetes Bandbreitenstück voll ausnutzen. Die restliche durch den Kommunikationssatelliten zur Verfügung gestellte Kommunikationsbandbreite wird dann auf die übrigen Nutzer aufgeteilt. So können beispielsweise die Einsatzkräfte und einige wenige VIPs einen Großteil der Kommunikationsbandbreite nutzen, wohingegen sich beispielsweise 5000 Personen die jeweils restliche Kommunikationsbandbreite teilen. So ist zwar die Kommunikationsfähigkeit der übrigen Personen eingeschränkt, es wird jedoch sichergestellt, dass die Einsatzkräfte und die VIPs ausreichend schnell Daten austauschen können.

Dabei können auch verschiedene Nutzer zu Nutzergruppen zusammengefasst werden, beispielsweise zu Bronzenutzern, Silbernutzern und Goldnutzern und den jeweiligen Gruppen einzelne Bandbreitenstücke zugeordnet werden.

Bevorzugt wird dabei ein Bandbreitenstück wenigstens einem Nutzer für eine feste Dauer und/oder eine feste Datenmenge zugeordnet. Hierdurch kann der jeweilige Nutzer sicherstellen, dass er für die Dauer bzw. zum Herunterladen einer bestimmten Datei einer bestimmten Größe eine ausreichend hohe Bandbreite zur Verfügung gestellt kriegt, und seine erhöhte Kommunikationskapazität danach für die restlichen Nutzer freigeben. Dabei können die feste Dauer und die feste Datenmenge auch gleichzeitig berücksichtigt werden. Je nachdem, ob zuerst die Dauer abgelaufen ist oder die feste Datenmenge erreicht wurde, kann dann die Kommunikationsbandbreite reduziert werden.

Entsprechend einer weiteren vorteilhaften Ausgestaltung des erfindungsgemäßen Verfahrens, befinden sich die Kommunikationssatelliten auf einem Orbit in der niedrigen Erdumlaufbahn. Eine solche Umlaufbahn wird auch als Low Earth Orbit (LEO) bezeichnet. Das Positionieren von Satelliten auf einer niedrigen Erdumlaufbahn ist einfacher und kostengünstiger möglich, als das Positionieren auf höheren Erdumlaufbahnen. Somit lassen sich besonders viele Kommunikationssatelliten entsprechend im Orbit platzieren, bei gleichzeitigem verhindern, dass die Kosten zum Betrieb des Satellitenschwarms zu groß werden. Je mehr Kommunikationssatelliten entsprechend in den Orbit gebracht werden, desto größer ist auch die Netzabdeckung auf der Erde. Somit steigt hierdurch die Zuverlässigkeit zur Bereitstellung des nicht-terrestrischen Kommunikationsnetzwerks.

Eine weitere vorteilhafte Ausgestaltung des erfindungsgemäßen Verfahrens sieht dabei ferner vor, dass wenigstens ein dem nicht-terrestrische Kommunikationsnetzwerk zugrunde liegendes Kommunikationssignal ausgebildet wird von:
- einem Mobilfunksignal, insbesondere in Form von 1G bis 5G; und/oder
- einem Wi-Fi-Signal.

Typische in Fahrzeuge integrierte Telekommunikationseinheiten, oder auch mobile Endgeräte wie Smartphones, verfügen typischerweise über die Fähigkeit mobile Daten per Mobilfunk sowie per Wi-Fi auszutauschen. Somit sind keine strukturellen Änderungen der entsprechenden Geräte erforderlich, um eine Kommunikation mit dem nicht-terrestrischen Kommunikationsnetzwerk ermöglichen zu können. Dabei kommen neben 1G bis 5G auch künftige Mobilfunkstandards infrage, wie beispielsweise 6G, 7G und dergleichen.

Bei einem Kommunikationssystem, umfassend einen Satellitenschwarm, eine Steuerungszentrale und wenigstens einen Nutzer, sind erfindungsgemäß der Satellitenschwarm, die Steuerungszentrale und der Nutzer zur Ausführung eines im vorigen beschriebenen Verfahrens eingerichtet. Dabei bildet der Nutzer einen Agenten aus. Es handelt es sich bei dem Nutzer um einen Fahrzeuginsassen bzw. ein in das Fahrzeug integriertes Kommunikationsmittel, wie entsprechende Steuergeräte, Recheneinheiten, Telekommunikationseinheiten und dergleichen.

Weitere vorteilhafte Ausgestaltungen des erfindungsgemäßen Verfahrens zum Betrieb des Satellitenschwarms ergeben sich auch aus den Ausführungsbeispielen, welche nachfolgend unter Bezugnahme auf die Figuren näher beschrieben werden.

Dabei zeigen:
- Fig. 1: eine stark schematisierte Ansicht auf einen eine Zielregion mit einem nicht-terrestrischen Kommunikationsnetzwerk versorgenden Kommunikationssatelliten, wobei der Kommunikationssatellit während des Überfliegens der Zielregion seine Geschwindigkeit reduziert;
- Fig. 2: eine stark schematisierte Ansicht eines Kommunikationssatelliten, der einen zweiten Kommunikationsstrahl auf die Zielregion richtet;
- Fig. 3: eine stark schematisierte Ansicht eines Kommunikationssatelliten, der seinen Kommunikationsstrahl gezielt auf die Zielregion ausrichtet;
- Fig. 4: eine stark schematisierte Ansicht auf einen zweiten Kommunikationssatelliten, der einen ersten Kommunikationssatelliten zur Bereitstellung eines Anschlusses an das nicht-terrestrische Kommunikationsnetzwerk in der Zielregion ablöst; und
- Fig. 5: eine stark schematisierte Ansicht auf einen Kommunikationssatelliten, der die Kommunikationsbandbreite seines Kommunikationsstrahls in einzelne Bandbreitenstücke unterteilt.

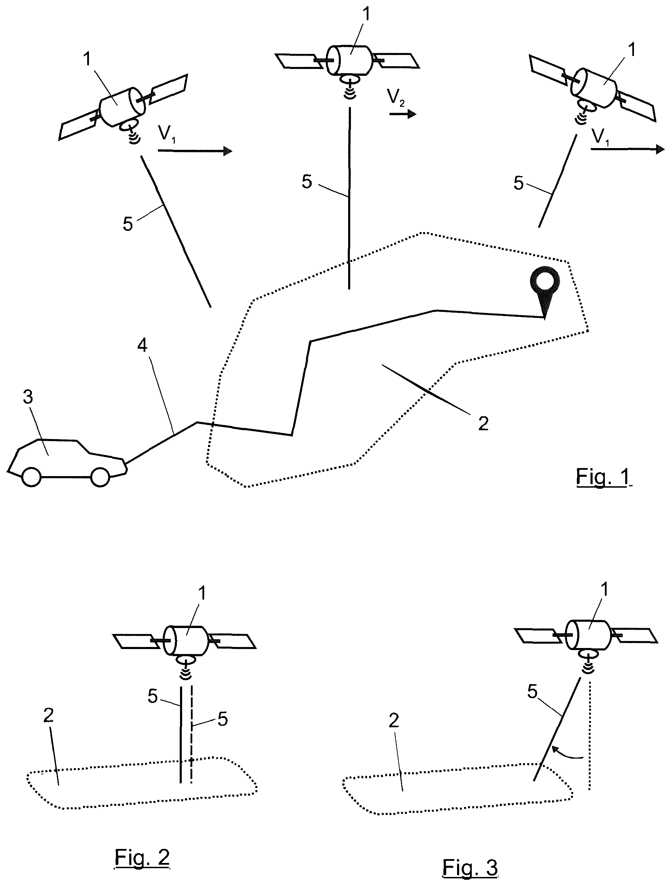

Figur 1 zeigt ein Fahrzeug 3, welches entlang einer Navigationsroute 4 von einem Startort zu einem Zielort fährt. Das Fahrzeug 3 verfügt über geeignete Kommunikationsmittel zum Aufbauen einer Kommunikationsverbindung zu einem über wenigstens einen Kommunikationssatelliten 1 eines Satellitenschwarms bereitgestellten nicht-terrestrischen Kommunikationsnetzwerks.

Der Satellitenschwarm umfasst eine Vielzahl solcher Kommunikationssatelliten 1, die auf verschiedenen Umlaufbahnen, bevorzugt in einem niedrigen Erdorbit, um die Erde kreisen. Dies ermöglicht das Bereitstellen einer Netzabdeckung auch in entlegenen Regionen der Erde. Bevorzugt umfasst der Satellitenschwarm so viele Kommunikationssatelliten 1, dass zu jeder Zeit an jedem Punkt der Erde eine generelle Netzabdeckung gewährleistet werden kann.

Über terrestrische Kommunikationsnetzwerke lässt sich typischerweise eine im Vergleich erhöhte Kommunikationsbandbreite bereitstellen, als über nicht-terrestrische Kommunikationsnetzwerke. Die Versorgung mit einer somit generell geringeren Kommunikationsbandbreite ist insbesondere problematisch, wenn sich innerhalb eines von einem bestimmten Kommunikationssatellit 1 bedienten Gebiets besonders viele Nutzer des Kommunikationsnetzwerks aufhalten. Mit Hilfe eines erfindungsgemäßen Verfahrens zum Betrieb des Satellitenschwarms wird in Abhängigkeit des tatsächlich vorliegenden Kommunikationsbedarfs in einer Zielregion die Kommunikationskapazität erhöht, wenn ein erhöhter Kommunikationsbedarf festgestellt wird. Hierzu überwacht eine Steuerungszentrale des Satellitenschwarms den Kommunikationsbedarf für das Kommunikationsnetzwerk und erhöht nach Detektieren des Anstiegs des Kommunikationsbedarfs gegenüber einem Standardniveau, die durch wenigstens ein Kommunikationssatellit 1 bereitstellbare Kommunikationskapazität in der Zielregion 2 auf der Erde für ein Zielzeitfenster.

Die folgenden Figuren zeigen dabei verschiedene Möglichkeiten, wie die Kommunikationskapazität gesteigert werden kann. Figur 1 zeigt dabei ein konkretes Ausführungsbeispiel, wie die Zielregion und das Zielzeitfenster ermittelt wird. Diese Aufgabe wird vom Fahrzeug 3 automatisiert unter Analyse der Navigationsroute 4 durchgeführt. So ermittelt das Fahrzeug 3, durch welche geografischen Gebiete die Navigationsroute 4 verläuft und teilt diese Information zusammen mit den jeweiligen Zeiten, wann sich das Fahrzeug 3 an welcher Stelle auf der Navigationsroute 4 aufhalten wird, der Steuerungszentrale des Satellitenschwarms mit. Diese kann dann entsprechend die Kommunikationssatelliten 1 des Satellitenschwarms ansteuern, um in der hieraus ermittelten Zielregion 2 zum entsprechend abgeleiteten Zielzeitfenster die Kommunikationskapazität zu erhöhen.

Figur 1 zeigt dabei die Reduktion der Orbitalgeschwindigkeit des Kommunikationssatelliten 1 während des Überflugs über die Zielregion 2, bzw. während ein vom Kommunikationssatellit 1 auf die Erde gerichteter Kommunikationsstrahl 5 auf die Zielregion 2 richtbar ist. Die Orbitalgeschwindigkeit ist dabei angedeutet durch die Pfeile V₁ und V₂.

Durch das Verlangsamen der Orbitalgeschwindigkeit wird die Dauer erhöht, zu der eine Netzabdeckung durch den Kommunikationssatelliten 1 in der Zielregion 2 erzeugbar ist. Dies erhöht die Zuverlässigkeit, dass das nicht-terrestrische Kommunikationsnetzwerk erreichbar ist. Dies erhöht die Kommunikationskapazität insbesondere für solche Satellitenschwärme, bei denen Zeitlücken existieren, bis ein weiterer Kommunikationssatellit die jeweilige Zielregion 2 zur Bereitstellung einer Netzanbindung überfliegt.

Figur 2 zeigt ein weiteres Ausführungsbeispiel, bei dem der Kommunikationssatellit 1 zur Erhöhung der Kommunikationskapazität wenigstens einen weiteren Kommunikationsstrahl 5 auf die Erde wirft. Mittels dieses zusätzlichen Kommunikationsstrahls 5 lässt sich die nutzbare Kommunikationsbandbreite in der Zielregion 2 erhöhen. Es wäre auch denkbar, dass die Kommunikationsbandbreite eines jeweiligen Kommunikationsstrahls 5 direkt steuerbar ausgeführt ist und zur Erhöhung der Kommunikationskapazität selbst erhöht wird.

Figur 3 zeigt eine mögliche Ausführungsform des erfindungsgemäßen Verfahrens, in der der Kommunikationssatellit 1 über Mittel zum gezielten Ausrichten des Kommunikationsstrahls 5 gegenüber der Erde aufweist. Beispielsweise können hierzu auslenkbare Richtantennen am jeweiligen Kommunikationssatelliten 1 vorgesehen sein. Nähert sich der Kommunikationssatellit 1 der Zielregion 2 an, so kann der entsprechende Kommunikationsstrahl 5 verschwenkt werden und somit schneller auf die Zielregion 2 ausgerichtet werden. Somit kann früher eine Netzabdeckung in der Zielregion 2 bereitgestellt werden. Entsprechend kann während des Überflugs der Zielregion 2 der Kommunikationsstahl 5 nachgeführt werden, sodass beim Verlassen der Zielregion 2 die Netzabdeckung noch so lange aufrecht erhalten werden kann, bis auch der maximal ausgelenkte Kommunikationsstrahl 5 aus der Zielregion 2 herauswandert.

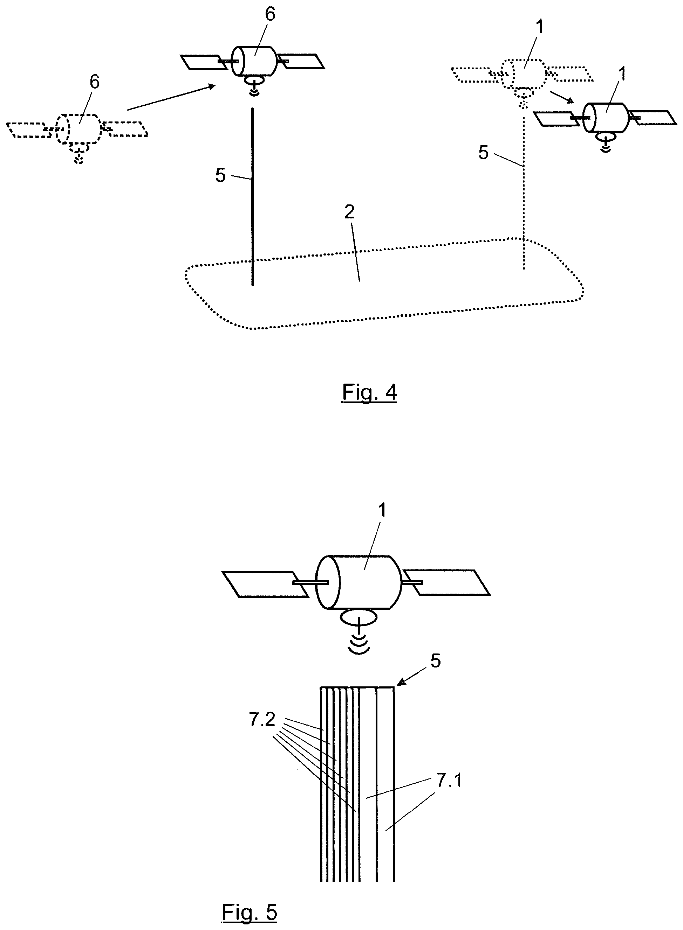

Figur 4 zeigt das Ansteuern eines zweiten Kommunikationssatelliten 6 zum Ersetzen des vorausgehenden Kommunikationssatelliten 1. Reichen die bestehenden Kommunikationskapazitäten nicht aus, um den Kommunikationsbedarf innerhalb der Zielregion 2 zum Zielzeitfenster zu decken, beispielsweise weil die durch einen oder mehrere vorausgehende Kommunikationssatelliten 1 zur Verfügung gestellte Kommunikationsbandbreite kleiner ist, als die dem Kommunikationsbedarf entsprechende Kommunikationsbandbreite, oder auch für den Fall, dass beispielsweise überhaupt kein vorausgehender Kommunikationssatellit 1 zur Versorgung der Zielregion 2 mit Netzabdeckung zur Verfügung steht, so kann gezielt die Steuerungszentrale wenigstens einen weiteren, hier besagten zweiten Kommunikationssatellit 6, auffinden, dessen Orbitalbahn das rechtzeitige Werfen seines Kommunikationsstrahls 5 auf die Zielregion 2 erlaubt. So wird hierzu die Bewegungsgeschwindigkeit des zweiten Kommunikationssatelliten 6 erhöht, damit der zweite Kommunikationssatellit 6 früher eine entsprechende Position erreicht, an der der Kommunikationsstrahl 5 des zweiten Kommunikationssatelliten 6 auf die Zielregion 2 werfbar ist.

Die Kommunikationssatelliten 1 und 6 bewegen sich dabei innerhalb einer festen Zeitdauer von einer ersten Position zu einer zweiten Position fort, was in Figur 4 durch jeweilige gestrichelte und durchgezogene Linien angedeutet ist. Die erhöhte Orbitalgeschwindigkeit des zweiten Kommunikationssatelliten 6 ist dabei durch die im Vergleich zum vorausgehenden Kommunikationssatellit 1 größere zurückgelegte Strecke veranschaulicht.

In Figur 5 teilt der Kommunikationssatellit 1 seine zur Verfügung stellbare Kommunikationsbandbreite in mehrere Bandbreitenstücke 7.1 und 7.2 auf. Die Bandbreitenstücke 7.1 und 7.2 können sich dabei durch die zur Verfügung stellbare Kommunikationsbandbreite unterscheiden. So beträgt die Kommunikationsbandbreite der Bandbreitenstücke 7.1 beispielsweise 5 GBit/s und die der Bandbreitenstücke 7.2 lediglich 1 GBit/s. Es können bestimmte Bandbreitenstücke 7.1, 7.2 für einzelne Nutzer oder Nutzergruppen, wie beispielsweise Einsatzkräfte oder zahlungswillige VIPs, reserviert werden. Die verbleibende Kommunikationsbandbreite, beispielsweise ein einzelnes verbleibendes Bandbreitenstück, wird dann auf die übrigen Nutzer aufgeteilt.

Die in den Figuren gezeigten Ausführungsbeispiele wurden anhand eines einzigen Kommunikationssatelliten 1 bzw. eines zweiten Kommunikationssatelliten 6 beschrieben. Generell könnte es auch sein, dass gleichzeitig mehrere nicht näher dargestellte Kommunikationssatelliten eine Netzabdeckung in der Zielregion 2 bereitstellen können. Anhand der gezeigten Ausführungsbeispiele wird deutlich, dass zur Erhöhung der Kommunikationskapazität in der Zielregion 2 zum Zielzeitfenster die bereitgestellte Kommunikationsbandbreite erhöht wird. Hierzu können einzelne Kommunikationssatelliten ihre Kommunikationsbandbreite erhöhen oder aber auch mehr Kommunikationssatelliten bereitgestellt werden, deren Kommunikationsbandbreiten sich dann addieren. Indem die Zeitdauer, zu der ein einziger Kommunikationssatellit seinen Kommunikationsstrahl 5 auf die Zielregion 2 ausrichten kann, erhöht wird, wird erreicht, dass gleichzeitig noch mehr Kommunikationssatelliten eine Netzabdeckung in der Zielregion 2 bereitstellen können. Entsprechend wird die Kommunikationskapazität erhöht. Sinkt der Kommunikationsbedarf auf das Standardniveau ab, so können die jeweiligen Kommunikationssatelliten entsprechend angesteuert werden, um die gesteigerte Kommunikationskapazität wieder auf das Ausgangsniveau zu reduzieren. Dies ermöglicht eine besonders flexible Bereitstellung des nicht-terrestrischen Kommunikationsnetzwerks in Abhängigkeit des tatsächlich vorliegenden Kommunikationsbedarfs. Somit lässt sich der Satellitenschwarm besonders effizient nutzen.

## Patentansprüche

1. Verfahren zum Betrieb eines Satellitenschwarms zur Bereitstellung eines nicht-terrestrischen Kommunikationsnetzwerks, wobei der Satellitenschwarm eine Vielzahl Kommunikationssatelliten (1) umfasst, welche individuell durch eine bodengebundene Steuerungszentrale steuerbar sind,
wobei
die Steuerungszentrale einen Kommunikationsbedarf für das Kommunikationsnetzwerk überwacht und nach Detektieren eines Anstiegs des Kommunikationsbedarfs gegenüber einem Standardniveau, wenigstens einen Kommunikationssatelliten (1) zur Erhöhung der durch wenigstens den jeweiligen Kommunikationssatelliten (1) bereitstellbaren Kommunikationskapazität in einer Zielregion (2) auf der Erde für ein Zielzeitfenster ansteuert,
**dadurch gekennzeichnet, dass**
zumindest eine der folgenden Aktionen durchgeführt wird, um die Kommunikationskapazität zu erhöhen:
- Reduzieren der Orbitalgeschwindigkeit des Kommunikationssatelliten (1) für den Zeitraum zu dem ein Kommunikationsstrahl (5) des Kommunikationssatelliten (1) auf die Zielregion (2) richtbar ist; und/oder
- Bestimmen eines zweiten Kommunikationssatelliten (6) durch die Steuerungszentrale dessen Orbitalbahn ein Richten seines Kommunikationsstrahls (5) auf die Zielregion (2) zum Zielzeitfenster erlaubt und Erhöhen der Orbitalgeschwindigkeit des zweiten Kommunikationssatelliten (6) derart, dass der Kommunikationsstrahl (5) des zweiten Kommunikationssatelliten (6) spätestens dann auf die Zielregion (2) richtbar ist, wenn der Kommunikationsstrahl (5) des vorausgehenden Kommunikationssatelliten (1) die Zielregion (2) verlässt;
wobei
ein Agent ein Kommunikationsbedarfssignal an die Steuerungszentrale übermittelt, wobei das Kommunikationsbedarfssignal zumindest die Zielregion (2) und das Zielzeitfenster beschreibt; wobei
der Agent durch ein Fahrzeug (3) ausgebildet wird; und wobei
das Fahrzeug (3) die Zielregion (2) und das Zielzeitfenster durch Analyse einer in eine Navigationseinheit des Fahrzeugs (3) einprogrammierte Navigationsroute (4) ermittelt.

2. Verfahren nach Anspruch 1,
**dadurch gekennzeichnet, dass**
die Steuerungszentrale den wenigstens einen Kommunikationssatelliten (1) zur Reduktion der Kommunikationskapazität ansteuert, wenn der Kommunikationsbedarf auf das Standardniveau zurückgegangen ist.

3. Verfahren nach Anspruch 1 oder 2,
**dadurch gekennzeichnet, dass**
zumindest eine der folgenden Aktionen durchgeführt wird, um die Kommunikationskapazität weiter zu erhöhen:
- Erhöhen der Kommunikationsbandbreite eines von dem Kommunikationssatelliten (1) auf die Erde gerichteten Kommunikationsstrahls (5);
- Bereitstellen wenigstens eines weiteren durch den Kommunikationssatelliten (1) auf die Erde gerichteten Kommunikationsstrahls (5);
- Ausrichten des von dem Kommunikationssatellit (1) auf die Erde gerichteten Kommunikationsstrahls (5) auf die Zielregion (2); und/oder
- Aufteilen der Kommunikationsbandbreite des Kommunikationsstrahls (5) des Kommunikationssatelliten (1) in eine Anzahl an Bandbreitenstücken (7.1, 7.2) und Zuordnen eines Bandbreitenstücks (7.1, 7.2) zu wenigstens einem bestimmten Nutzer.

4. Verfahren nach Anspruch 3,
**dadurch gekennzeichnet, dass**
ein Bandbreitenstück (7.1, 7.2) wenigstens einem Nutzer für eine feste Dauer und/oder eine feste Datenmenge zugeordnet wird.

5. Verfahren nach einem der Ansprüche 1 bis 4,
**dadurch gekennzeichnet, dass**
sich die Kommunikationssatelliten (1) auf einem Orbit in der niedrigen Erdumlaufbahn befinden.

6. Verfahren nach einem der Ansprüche 1 bis 5,
**dadurch gekennzeichnet, dass**
wenigstens ein dem nicht-terrestrische Kommunikationsnetzwerk zugrunde liegendes Kommunikationssignal ausgebildet wird von:
- einem Mobilfunksignal, insbesondere in Form von 1G bis 5G; und/oder
- einem Wi-Fi-Signal.

7. Kommunikationssystem, umfassend einen Satellitenschwarm, eine Steuerungszentrale und wenigstens einen Nutzer,
**dadurch gekennzeichnet, dass**
der Satellitenschwarm, die Steuerungszentrale und der Nutzer zur Ausführung eines Verfahrens nach einem der Ansprüche 1 bis 6 eingerichtet sind.

## Claims

1. Method for operating a satellite swarm in order to provide a non-terrestrial communication network, wherein the satellite swarm comprises a plurality of communication satellites (1) which can be individually controlled by a ground-based control center,
wherein
the control center monitors a communication requirement for the communication network and, upon detecting an increase in the communication requirement compared to a standard level, controls at least one communication satellite (1) in order to increase the communication capacity that can be provided by at least the relevant communication satellite (1) in a target region (2) on Earth for a target time window,
**characterized in that**
at least one of the following actions is carried out in order to increase the communication capacity:
- reducing the orbital velocity of the communication satellite (1) for the period during which a communication beam (5) from the communication satellite (1) can be directed toward the target region (2); and/or
- determining a second communication satellite (6) by means of the control center, the orbital path of which satellite allows its communication beam (5) to be directed toward the target region (2) at the target time window, and increasing the orbital velocity of the second communication satellite (6) such that the communication beam (5) of the second communication satellite (6) can be directed toward the target region (2) at the latest when the communication beam (5) of the preceding communication satellite (1) leaves the target region (2);
wherein
an agent transmits a communication request signal to the control center, wherein the communication request signal describes at least the target region (2) and the target time window; wherein
the agent is formed by a vehicle (3); and wherein
the vehicle (3) ascertains the target region (2) and the target time window by analyzing a navigation route (4) programmed into a navigation unit of the vehicle (3).

2. Method according to claim 1,
**characterized in that**
the control center controls the at least one communication satellite (1) in order to reduce the communication capacity when the communication requirement has returned to the standard level.

3. Method according to claim 1 or 2,
**characterized in that**
at least one of the following actions is carried out in order to further increase the communication capacity:
- increasing the communication bandwidth of a communication beam (5) directed to Earth by the communication satellite (1);
- providing at least one additional communication beam (5) directed to Earth by the communication satellite (1);
- aligning the communication beam (5) directed to Earth by the communication satellite (1) on the target region (2); and/or
- dividing the communication bandwidth of the communication beam (5) of the communication satellite (1) into a number of bandwidth segments (7.1, 7.2) and assigning a bandwidth segment (7.1, 7.2) to at least one specific user.

4. Method according to claim 3,
**characterized in that**
a bandwidth segment (7.1, 7.2) is assigned to at least one user for a fixed duration and/or a fixed amount of data.

5. Method according to any of claims 1 to 4,
**characterized in that**
the communication satellites (1) are located in an orbit in low Earth orbit.

6. Method according to any of claims 1 to 5,
**characterized in that**
at least one communication signal underlying the non-terrestrial communication network is formed by:
- a mobile signal, in particular in the form of 1G to 5G; and/or
- a Wi-Fi signal.

7. Communication system comprising a satellite swarm, a control center and at least one user,
**characterized in that**
the satellite swarm, the control center and the user are designed to carry out a method according to any of claims 1 to 6.

## Revendications

1. Procédé d'exploitation d'un essaim de satellites destiné à fournir un réseau de communication non terrestre, dans lequel l'essaim de satellites comprend une pluralité de satellites de communication (1) qui peuvent être commandés individuellement par une centrale de commande au sol,
dans lequel
la centrale de commande surveille un besoin en communication du réseau de communication et, après avoir détecté une augmentation de ce besoin en communication par rapport à un niveau standard, commande au moins un satellite de communication (1) afin d'augmenter la capacité de communication pouvant être fournie par au moins ce satellite de communication (1) dans une région cible (2) sur Terre pour une fenêtre temporelle cible,
**caractérisé en ce qu'**au moins l'une des actions suivantes est effectuée afin d'augmenter la capacité de communication :
- réduction de la vitesse orbitale du satellite de communication (1) pendant la période au cours de laquelle un faisceau de communication (5) du satellite de communication (1) peut être orienté vers la région cible (2) ; et/ou
- détermination, par la centrale de commande, d'un second satellite de communication (6) dont la trajectoire d'orbite permet d'orienter son faisceau de communication (5) vers la région cible (2) pendant la fenêtre temporelle cible, et augmentation de la vitesse orbitale du second satellite de communication (6) de telle sorte que le faisceau de communication (5) du second satellite de communication (6) puisse être orienté vers la région cible (2) au plus tard lorsque le faisceau de communication (5) du satellite de communication (1) précédent quitte la région cible (2) ;
dans lequel
un agent transmet un signal de besoin en communication à la centrale de commande, dans lequel le signal de besoin en communication décrit au moins la région cible (2) et la fenêtre temporelle cible ; dans lequel
l'agent est formé par un véhicule (3) ; et dans lequel
le véhicule (3) établit la région cible (2) et la fenêtre temporelle cible en analysant un itinéraire de navigation (4) programmé dans une unité de navigation du véhicule (3).

2. Procédé selon la revendication 1,
**caractérisé en ce que**
la centrale de commande commande l'au moins un satellite de communication (1) afin de réduire la capacité de communication lorsque le besoin en communication est revenu au niveau standard.

3. Procédé selon la revendication 1 ou 2,
**caractérisé en ce que**
au moins l'une des actions suivantes est effectuée afin d'augmenter encore la capacité de communication :
- augmentation de la bande passante de communication d'un faisceau de communication (5) dirigé vers la Terre par le satellite de communication (1) ;
- fourniture d'au moins un faisceau de communication (5) supplémentaire dirigé vers la Terre par le satellite de communication (1) ;
- orientation du faisceau de communication (5) dirigé vers la Terre par le satellite de communication (1), en direction de la région cible (2) ; et/ou
- division de la bande passante de communication du faisceau de communication (5) du satellite de communication (1) en un nombre de tranches de bande passante (7,1, 7,2) et attribution d'une tranche de bande passante (7,1, 7,2) à au moins un utilisateur déterminé.

4. Procédé selon la revendication 3,
**caractérisé en ce que**
une tranche de bande passante (7,1, 7,2) est attribuée à au moins un utilisateur pour une durée déterminée et/ou un volume de données déterminé.

5. Procédé selon l'une des revendications 1 à 4,
**caractérisé en ce que**
les satellites de communication (1) se trouvent sur une orbite terrestre basse.

6. Procédé selon l'une des revendications 1 à 5,
**caractérisé en ce que**
au moins un signal de communication sous-jacent au réseau de communication non terrestre est formé par :
- un signal de téléphonie mobile, notamment sous forme de la 1G à la 5G ; et/ou
- un signal Wi-Fi.

7. Système de communication, comprenant un essaim de satellites, une centrale de commande et au moins un utilisateur,
**caractérisé en ce que**
l'essaim de satellites, la centrale de commande et l'utilisateur sont conçus pour mettre en œuvre un procédé selon l'une des revendications 1 à 6.
